# EUROPEAN PATENT APPLICATION

(11) **EP 1 550 887 A1**
(43) Date of publication of application: **06.07.2005**
(21) Application number: 03751416.3
(22) Date of filing: 09.10.2003
(51) Int. Cl.: G02B 5/30, B32B 27/00

(54) **TRANSFERABLE LIQUID CRYSTAL LAMINATE**

(30) Priority: 10.10.2002 JP 2002297002
(71) Applicant: Nippon Oil Corporation, Tokyo 105-8412 (JP)
(72) Inventor: SUZUKI, Shinichiro, c/o NiponN Oil Corporation, Yokohama-shi, Kanagawa 231-0815 (JP)
(74) Representative: Grünecker, Kinkeldey, Stockmair & Schwanhäusser
(86) International application number: PCT/JP2003/012962
(87) International publication number: WO 2004/034107

(57) **Abstract**

A transferable liquid crystal laminate comprises at least a releasable substrate, a protective layer and a cholesteric liquid crystal layer, characterized in that the protective layer side of the releasable substrate has been subjected to an easily separable adhesive treatment. The transferable liquid crystal laminate is excellent in separability and the appearance of a transferred portion after being transferred and is reduced in the formation of burrs, resulting in the decrease of yield.

## Description

### [Technical Field]

This invention relates to transferable liquid crystal laminates having a cholesteric liquid crystal layer used for the purposes of providing aesthetic enhancing and forgery prevention effects, and more particularly to those which are improved in separability or transferability due to the use of a releasable substrate having been to subjected to a treatment with an adhesive that makes the substrate easily separable. This treatment may be referred to as "easily separable adhesive treatment" hereinafter.

### [Background Art]

In recent years, there have been developed methods wherein a hologram and the selective reflectivity characteristics of a cholesteric liquid crystal are used in a forgery preventing item or an aesthetic member for examples as disclosed in Japanese Patent Laid-Open Publication Nos. 63-51193 and 4-144796.

Such a forgery preventing item is prepared in the form of a transferable laminated film and is transferred to a receiving object by means of a hot stamp. In a transferring method using a hot stamp, a portion to be transferred of a transferable laminated film is released and transferred to an receiving object by simultaneously applying heat and pressure to the laminated film. The portion to be transferred may be hereinafter referred to as "release transfer portion".

When the release transfer portion is transferred to the object, a good separability between the release transfer portion and the non-release non-transfer portion is required. The term "separability" used herein denotes a capability that renders the release transfer portion released in a desired shape on the object without leaving burrs attached to edges thereof and is sometimes referred to as "foil separability or foil cutting properties" in the related art. That is, when the separability is not so good, the release transfer portion can not be transferred in a desired shape.

A transferable laminate has generally a release transfer layer formed on a releasable substrate. The peel strength upon releasing and transferring is determined depending on the surface condition of the releasable substrate and the properties of the release transfer portion. If the peel strength is too small, the releasability will be good but the separability will be poor because the release transfer portion is released together with burrs. If the peel strength is too large, the releasability will be deteriorated and there will arises a problem that the release transfer portion fail to be transferred to the object completely and partially remains on the releasable substrate.

An object of the present invention is to provide a transferable liquid crystal laminate having a cholesteric liquid crystal layer which laminate is excellent in separability and in the appearance of a transferred portion after being transferred and reduced in the formation of burrs causing the decrease of yield.

### [Disclosure of the Invention]

The present invention was achieved as a result of an extensive research and study conducted by the inventor of the present invention.

That is, the present invention provides a transferable liquid crystal laminate comprising at least a releasable substrate, a protective layer and a cholesteric liquid crystal layer, the protective layer side of the releasable substrate having been subjected to an easily separable adhesive treatment.

It is preferred in the transferable liquid crystal laminate of the present invention that the peel strength between the releasable substrate and the protective layer be from 1.95 N/m to 19.5 N/m.

It is preferred in the transferable liquid crystal laminate of the present invention that the cholesteric liquid layer has on a part thereof diffractivity.

The present invention will be described in more detail below.

The transferable liquid crystal laminate of the present invention comprises at least a releasable substrate, a protective layer and a cholesteric liquid crystal layer. The term "a releasable substrate, a protective layer and a cholesteric liquid crystal layer" denotes a structure wherein a releasable substrate, a protective layer and a cholesteric liquid crystal layer are laminated in this order.

No particular limitation is imposed on the releasable substrate which is a constituting element of the present invention as long as it is a film-like object whose surface to face the protection layer is treated with an easily separable adhesive and releasable from the protective layer. Examples of the releasable substrate include polyethylene, polypropylene, poly(4-methyl-pentene-1), polyethylene terephthalate, polybutylene terephthalate, polyethylene naphthalate and polycarbonate. Surface treatment such as antistatic treatment may be carried out on the surfaces and/or the surface facing the protective layer, of the releasable substrate.

The thickness of the releasable substrate is from 10 to 100 µm and preferably from 12 to 38 µm. A thickness out of this range is not preferred because it makes it difficult to carry the releasable substrate and produce a laminate and the releasability becomes poor.

The peel strength between the easily separable adhesive surface of the releasable substrate and the protective layer is from 1.95 to 19.5 N/m and preferably from 3.9 to 11.7 N/m.

No particular limitation is imposed on the protective layer (may be referred to as "protective layer 1") which is a constituting element of the present invention as long as it is excellent in adhesivity to the cholesteric liquid crystal layer and does not impair the optical characteristics thereof.

For example, the protective layer may be those obtained by forming a protective layer forming material into a film, a sheet or a lamina. Preferred protective layer forming materials are preferably photo- or electron beam-setting reactive adhesives.

Eligible reactive adhesives are those obtained by blending prepolymers and/or monomers having photo- or electron beam-polymerizability, if necessary, with other monofunctional monomers, polyfunctional monomers, various polymers, stabilizers, photo-polymerization initiators and sensitizers.

Specific examples of the prepolymer having photo- or electron beam-polymerizability include polyester acrylate, polyester methacrylate, polyurethane acrylate, polyurethane methacrylate, epoxy acrylate, epoxy methacrylate, polyol acrylate and polyol methacrylate. Examples of the monomers having photo- or electron beam-polymerizability include monofunctional acrylate, monofunctional methacrylate, bifunctional acrylate, bifunctional methacrylate, trifunctional or more polyfunctional acrylate and trifunctional or more polyfunctional methacrylate. Commercially available products of these prepolymers may also be used. For example, Aronix (acrylic speciality monomer, oligomer manufactured by Toagosei Co., Ltd.), Light Ester (manufactured by Kyoeisha Chemical Co., Ltd.) and Biscoat (manufactured by Osaka Organic Chemical Industry Ltd.) may be used.

Eligible photo-polymerization initiators are benzophenone derivatives, acetophenone derivatives, benzoin derivatives, thioxanthones, Micheler's ketone, benzyl derivatives, triazine derivatives, acylphosphine oxides and azo compounds.

The viscosity of the photo- or electron beam-setting reactive adhesive is appropriately selected according to the processing temperature thereof and thus can not be determined with certainty. However, it is in the range of generally 10 to 2000 mPa · S, preferably 50 to 1000 mPa · S and more preferably 100 to 500 mPa · S at a temperature of 25 °C. A viscosity of less than 10 mPa • S would lead to a difficulty in obtaining a desired thickness. A viscosity exceeding 2000 mPa • S would cause the undesirably reduced workability. When the viscosity departs from the aforesaid range, it is preferred that the proportion of the solvent and the monomer be appropriately adjusted so as to obtain a desired viscosity.

Further, when the photo-setting reactive adhesive is used, it can be cured using known curing means such as a low-pressure mercury lamp, a high-pressure mercury lamp, a super high-pressure mercury lamp, a metal halide lamp, and a xenon lamp. Since the irradiation dose varies according to the type of the reactive adhesive to be used, it cannot be determined with certainty. However, it is generally in the range of 50 to 2000 mJ/cm², and preferably 100 to 1000 mJ/cm².

When the electron beam-setting reactive adhesive is used, the method for curing the adhesive is appropriately selected based on the penetrating power and curing power of the electron beam, and hence it cannot be determined with certainty. However, the adhesive can be cured by irradiation under the condition where the accelerating voltage is generally from 50 to 1000 kV, and preferably from 100 to 500 kV.

An ultraviolet absorber or a surfactant may be added to the reactive adhesive.

No particular limitation is imposed on the ultraviolet absorber as long as it is compatible with or dispersed in the protective layer forming material. Examples of the ultraviolet absorber include organic ultraviolet absorbers such as benzophenone compounds, salicylate compounds, benzotriazole compounds, anilide oxalate compounds and cyanoacrylate compounds and inorganic ultraviolet absorbers such as cesium oxide, titanium oxide and zinc oxide. Among these ultraviolet absorbers, the benzophenon compounds with a high ultraviolet absorption efficiency are preferably used. The ultraviolet absorber can be added singly or in combination. The mixing ratio of the ultraviolet absorber in the protective layer may vary depending upon the type of the protective layer forming material to be used. However, it is in the range of generally 0.1 to 20 percent by mass and preferably 0.5 to 10 percent by mass.

No particular limitation is imposed on the surfactant as long as it is compatible with or dispersed in the protective layer forming material. Examples of the surfactant include perfluoroalkyl compounds and modified silicone compounds. Among these surfactants, preferred are perfluoroalkyl compounds. The surfactant can be added singly or in combination. The mixing ratio of the surfactant in the protective layer may vary depending upon the type of the protective layer forming material to be used. However, it is in the range of generally 0.1 to 10 percent by mass and preferably 0.2 to 3 percent by mass.

The thickness of the protective layer may vary depending upon the application or workability. However, it is in the range of generally 0.5 to 50 µ m and preferably 1 to 10 µm.

The protective layer may be formed by any of known methods such as roll coating, die coating, bar coating, curtain coating, extrusion coating, gravure roll coating, spray coating and spin coating methods.

The protective layer may have on a part thereof a region with hard coat properties.

No particular limitation is imposed on the cholesteric liquid crystal layer which is a constituting element of the present invention as long as it can be fixed in cholesteric orientation. Therefore, the cholesteric liquid layer may be formed from any of polymeric liquid crystalline substances, low molecular weight liquid crystalline substances and mixtures thereof. Eligible polymeric liquid crystalline substances are various main chain type polymeric liquid crystalline substances, side chain type polymeric liquid crystalline substances and mixtures thereof. Examples of the main chain type polymeric liquid crystalline substance include polyester-, polyamide-, polycarbonate-, polyimide-, polyurethane-, polybenzimidazole-, polybenzoxazole-, polybenzthiazole-, polyazomethine-, polyesteramide-, polyestercarbonate- and polyesterimide-based polymeric liquid crystalline substances, and mixtures thereof. Examples of the side chain type polymeric liquid crystalline substances include those wherein a mesogen group as a side chain bonds to substances having a main chain structure such as a straight-chain or cyclic main chain, such as polyacrylate-, polymethacrylate-, polyvinyl-, polysiloxane-, polyether-, polymalonate-, and polyester-based ones, and mixtures thereof. Among these substances, the main chain type polymeric liquid crystalline substances are preferred, and the polyester-based ones are particularly preferred with the objectives of easy synthesis and aligning.

Suitable examples of the constituting unit of the polymers include an aromatic or aliphatic diol unit, an aromatic or aliphatic dicarboxylic acid unit, and an aromatic or aliphatic hydroxycarboxylic acid unit.

Examples of the low molecular weight liquid crystalline substances include compounds exhibiting liquid crystallinity obtained by introducing a reactive functional group such as vinyl, (meth)acryloyl, vinyloxy, epoxy, oxetane, carboxyl, hydroxyl, amino, and acid anhydrate groups to the terminal ends of saturated benzene carboxylic acid derivatives, unsaturated benzene carboxylic acid derivatives, biphenylcarboxylic acid derivatives, aromatic oxycarboxylic acid derivatives, Schiff base derivatives, bis-azo methine compound derivatives, azo compounds derivatives, azoxy compound derivatives, cyclohexane ester compounds derivatives, or sterol compound derivatives; and compositions obtained by adding a cross-linkable compound to any compound exhibiting liquid crystallinity among the above described compound derivatives.

Alternatively, various compounds having a functional group or site reactive by a thermal or photo crosslinking reaction may be blended with the liquid crystalline substance to an extent that the exhibition of liquid crystallinity is not prevented. Examples of such crosslinkable functional groups include the various above-described reactive functional groups. Examples of such compounds include those having a biphenyl, phenylbenzoate, or stilbene derivative as a main chain to which a functional group such as acryloyl, vinyl, and epoxy is introduced.

A cholesteric film, i.e., a liquid crystal film fixed in cholesteric orientation may be formed by any known method. For example, a composition containing the above-described liquid crystalline substance and various compounds added if necessary, in a molten state or in the form of a solution is coated over an alignment substrate so as to form a film layer and then dried and heated to align the composition in a liquid crystal orientation. If necessary, the aligned orientation is fixed by any of the above-described fixing methods such as photo irradiation and/or heat treatment (polymerization/crosslinking) thereby forming a liquid crystalline substance layer fixed in a liquid crystal orientation.

No particular limitation is imposed on the solvent used for preparing the solution to be coated over an alignment substrate as long as it can dissolve the liquid crystalline substance or composition used in the present invention and be evaporated under appropriate conditions. Preferred examples of the solvent include ketones such as acetone, methylethyl ketone, and isophorone; ether alcohols such as butoxyethyl alcohol, hexyloxyethyl alcohol, and methoxy-2-propanol; glycol ethers such as ethylene glycol dimethylether and diethylene glycol dimethylether; esters such as ethyl acetate, methoxypropyl acetate and ethyl lactate; phenols such as phenol and chlorophenol; amides such as N,N-dimethylformamide, N,N-dimethylacetoamide and N-methylpyrrolidone; halogenated hydrocarbons such as chloroform, tetrachloroethane, and dichlorobenzene; and mixtures thereof. A surfactant, a defoaming agent or a leveling agent may be added to the solution so as to form a uniform film layer on an alignment substrate. Furthermore, for the purpose of coloring, a dichroic dye, a normal dye and a pigment may be added to an extent that they do not prevent the liquid crystalline substance from exhibiting liquid crystallinity.

No particular limitation is imposed on the method of coating as long as the uniformity of the film layer can be maintained. Therefore, there may be used any conventional method such as roll coating, die coating, dip coating, curtain coating, and spin coating methods. The coating may be followed by a solvent-removing process, i.e., drying using a heater or hot air blowing. The film thickness of the coating in a dried state is from 0.3 to 20 µm, preferably 0.5 to 10 µm and more preferably from 0.7 to 3 µm. A film thickness deviating the range is not preferred because the resulting liquid crystalline substance layer would lack optical performance characteristics and would be insufficiently aligned.

Thereafter, the coated substance is aligned in a liquid crystal orientation by heat treatment, and then if necessary, the orientation is fixed. This heat treatment is conducted so as to allow the liquid crystalline substance to be aligned by its self-alignability by heating the substance to a range of temperatures at which the substance exhibits a liquid crystal phase. The conditions for the heat treatment can not determined with certainty because the optimum conditions and limits vary depending on the liquid crystal phase behavior temperature (transition temperature) of the liquid crystalline substance to be used. However, the temperature is within the range of usually 10 to 300 °C and preferably 30 to 250 °C. Too low temperatures are not preferred because aligning of the substance may not sufficiently progress, while too high temperatures are not also preferred because the substance may be decomposed or the alignment substrate would be adversely affected. The heat treatment is conducted for usually 3 seconds to 60 minutes and preferably 10 seconds to 30 minutes. The heat treatment for shorter than 3 seconds is not preferred because the substance may not be aligned in a liquid crystal orientation completely. Whereas the heat treatment for longer than 60 minutes is not also preferred because the productivity is extremely deteriorated. After the liquid crystalline substance is completely aligned in a liquid crystal orientation state by heat treatment, the liquid crystalline substance layer on an alignment substrate is fixed using a method suitable for the liquid crystalline substance.

Examples of the alignment substrate include films of such as polyimide, polyamide, polyamideimide, polyphenylene sulfide, polyphenylene oxide, polyether ketone, polyether ether ketone, polyether sulfone, polysulfone, polyethylene terephthalate, polyethylene naphthalate, polyarylate, triacetyl cellulose, epoxy resins, and phenol resins, and uniaxially stretched films thereof. Some of these films exhibit a sufficient capability to align the liquid crystalline substance used in the present invention depending on the production method of the films even though they have not been subjected to an aligning treatment. However, if a film does not have such an aligning capability sufficiently or at all, the film may be stretched while heated at an appropriate temperature; subjected to a rubbing treatment wherein the film is rubbed in one direction with a rayon cloth or wherein the film is rubbed after an alignment layer of a conventional aligning agent such as polyimide, polyvinyl alcohol, or a silane coupling agent is formed over the film; subjected to oblique vapor deposition using silicon oxide; or subjected to the combination of these treatments so as to be provided with the aligning capability. Alternatively, the alignment substrate may be any of metal plates of aluminum, iron, or copper and various glass plates on which surfaces fine grooves are regularly formed.

The cholesteric liquid crystal layer used in the present invention may have on a part thereof a region exhibiting diffractivity. The term "region exhibiting diffractivity" used herein denotes a region exhibiting such an effect that the light passing through or reflected from the region is diffracted into the portion geometrically corresponding to a shadow. The presence or absence of the region exhibiting diffractivity can be confirmed by observing whether there is present or not present the light emitted at a certain angle (high-order light) other than the light linearly transmitted therethrough or reflected therefrom (zero-order light) when, for example, laser light or the like is made incident upon the region. Alternatively, whether the region is formed or not can be confirmed by observing the surface and cross-section of the cholesteric liquid crystal layer by means of an atomic force microscope or a transmission electron microscope.

The region exhibiting diffractivity may be provided either on a surface or in the interior of the cholesteric liquid crystal layer. For example, the region may be provided on or in a part of the liquid crystal layer surface (liquid crystal surface region) or interior of the liquid crystal layer (liquid crystal interior region). The region may also be provided in a plurality of regions of the cholesteric liquid crystal layer for example, on the front and back surfaces or in a plurality of interior regions, of the liquid crystal layer. The region exhibiting diffractivity is not necessarily required to be formed as a layer having a uniform thickness on a liquid crystal layer surface or in the liquid crystal layer interior and thus may be formed at least on or in a part of the liquid crystal layer surface or interior. For example, the region exhibiting diffractivity may be formed by engraving a pattern such as a desired diagram, pictograph or numerical number. When the cholesteric liquid crystal layer has a plurality of regions each exhibiting diffractivity, all the regions are not required to exhibit the mutually same diffractivity and thus may exhibit mutually different diffractivity. The region exhibiting diffractivity forms a cholesteric orientation wherein the helical axes are not homogeneously parallel with each other in the direction of the thickness and preferably a cholesteric orientation wherein the helical axes are not homogeneously parallel with each other in the direction of the thickness and the helical pitch lengths are not homogeneously equal in the direction of the thickness. The regions other than this region have desirably the same cholesteric orientation as the normal cholesteric orientation, that is, a helical structure in which the helical axes are homogeneously parallel with each other in the direction of the thickness and the helical pitch lengths are homogeneously equal in the direction of the thickness. The term "liquid crystal layer surface" used herein denotes the portion of the single cholesteric liquid crystal layer, contacting the outside when the layer is regarded as a single unit while the term "liquid crystal layer interior" denotes the portion other than that contacting the outside.

Although any of the above-described cholesteric liquid crystal layers can be used in the present invention, those having a region exhibiting diffractivity at least on a part of a surface of and preferably over an entire surface of the layer are suitably used with the objective of the methods of producing the cholesteric liquid crystal layer and imparting thereto diffractivity. In the case where the region exhibiting diffractivity is formed on either one surface region of the liquid crystal layer, the front and back surfaces thereof, that is, the film surface having a region exhibiting diffractivity and the opposite surface thereof exhibit somewhat different optical effects and coloration effects. Therefore, it is possible to select which surface of the liquid crystal layer should be on the side of the protection layer constituting the laminate of the present invention depending on the application thereof, the intended functions and the like. Furthermore, when the region exhibiting diffractivity is formed into a layer, the thickness thereof is generally 50 percent or less, preferably 30 percent or less and more preferably 10 percent or less based on the thickness of the cholesteric liquid crystal layer. When the thickness exceeds 50 percent, the selective reflection characteristics and circularly polarization characteristics peculiar to a cholesteric liquid crystal phase may be degraded and thus the effects intended by the present invention may not be performed.

A cholesteric liquid crystal layer (film) having on a part thereof a region exhibiting diffractivity may be obtained by a method wherein the cholesteric liquid crystal film is superposed on the diffraction-patterned surface of a diffraction element substrate and heat and/or pressure are applied thereto thereby transferring the diffraction pattern onto the film or a method wherein a polymeric or low-molecular weight liquid crystalline substance or a mixture thereof is aligned in cholesteric orientation using a diffraction element substrate as an alignment substrate and fixed while maintaining the orientation.

The materials for the diffraction element substrate for use in transferring the diffraction pattern onto the liquid crystal film may be those such as metals and resins. Alternatively, any materials such as those obtained by imparting a diffraction function to a surface of a film and those obtained by transferring a thin film having a diffraction function onto a film are eligible as long as they have the diffraction function. Especially, a film or a film laminate having a diffraction function is more desirably used with the objective of the ease of handling thereof and the mass productivity thereof.

The term "diffraction element" used herein encompasses all diffraction elements generating diffracted light, such as a plate of a plane hologram. It may be of the type of a diffraction element derived from the surface profile, a so-called film thickness modulation hologram or of the type of a phase element which is not based on the surface profile or whose surface profile is converted into a refractive index profile, a so-called refractive index modulation hologram. In the present invention, the film thickness modulation hologram type is preferably used from the viewpoint of being capable of imparting the diffraction pattern information to the liquid crystal layer more easily. The refractive index modulation type can be preferably used in the present invention as long as it has undulations for generating diffraction in the surface profile.

A diffraction pattern may be transferred by applying pressure and/or heat by means of a heat roller, a laminator, a hot stamp, an electrothermal plate, or a thermal head. The conditions for applying heat and pressure can not be determined with certainty because they depend on the physical characteristics of the polymeric or low molecular weight liquid crystalline substance to be used and the type of diffraction element substrate. However, the pressure and temperature are suitably selected from the range of usually 0.01 to 100 MPa, and preferably 0.05 to 80 MPa and the range of 30 to 400 °C, and preferably 40 to 300 °C, respectively depending on the type of liquid crystalline substance and substrate to be used.

As described above, a cholesteric liquid crystal layer having a region exhibiting diffractivity can be obtained at the stage of aligning using a diffraction element substrate as an alignment substrate.

For the purpose of enhancing the heat-resistance of the resulting cholesteric liquid crystal layer, cross-linkers such as bisazide compounds and glycidyl methacrylate may be added to the liquid crystal material containing a polymeric liquid crystalline substance or a low molecular weight liquid crystalline substance in such a range that development of the cholesteric phase is not prevented. Addition of such cross-linkers makes it possible to crosslink the liquid crystal material in a state in which the cholesteric phase is developed. Furthermore, various additives such as dichroic dyes, dyes and pigments may be added to a polymeric liquid crystalline substance or a low molecular weight liquid crystalline substance in such an range that the effects achieved by the present invention are not impaired.

If necessary, a protective layer (hereinafter referred to as "protective layer 2") may be formed on the surface of the cholesteric liquid crystal layer, opposite to the releasable substrate. No particular limitation is imposed on the protective layer 2 as long as it has a sufficient adhesivity to the cholesteric liquid crystal layer. However, photo- or electron beam-setting reactive adhesives are preferably used. Eligible reactive adhesives are the same as those described with respect to the protective layer 1.

The thickness of the protective layer 2 is usually from 0.5 to 50 µm and preferably from 1 to 10 µm.

Next, the method for producing the laminate of the present invention will be described.

The method for producing the transferable liquid crystal laminate of the present invention is not limited to the methods described below but preferably goes through each step thereof.

A liquid crystalline substance fixed in cholesteric orientation on an alignment substrate is attached via an adhesive which will be a protective layer onto the easily separable adhesive surface having been formed beforehand on a releasable substrate and transferred thereto by releasing the alignment substrate thereby producing a laminate of the releasable substrate, protective layer and cholesteric liquid crystal layer.

When a protective layer 2 is formed on the opposite surface of the cholesteric liquid crystal layer, a releasable substrate 2 on which the protective layer 2 has been formed beforehand is attached to the cholesteric liquid crystal layer such that the protection layer 2 faces thereto, and the releasable substrate 2 is released thereby producing a laminate of the releasable substrate, protective layer 1, cholesteric liquid crystal layer and protective layer 2.

A diffraction pattern may be formed on the cholesteric liquid crystal layer by (1) a method wherein a diffraction element substrate is used as an alignment substrate, (2) a method wherein a diffraction pattern is transferred to the cholesteric liquid crystal layer having been fixed in cholesteric orientation on an alignment substrate or (3) a method wherein a diffraction pattern is transferred to the cholesteric liquid crystal layer after having been transferred to a releasable substrate.

### [Industrial Applicability]

The use of a releasable substrate having been subjected to an easily separable adhesive treatment in a transferable liquid crystal laminate having a cholesteric liquid crystal layer makes it possible to render the laminate excellent in separability and the appearance of a transferred portion and reduced in the formation of burrs causing the decrease of yield.

### [Best Mode for Carrying out the Invention]

Hereinafter, the present invention will be described in more details by way of the following examples and comparative example, which should not be construed as limiting the scope of the invention.

### (Reference Example 1)

A polycondensation reaction was conducted using 50 mmol of terephthalic acid, 20 mmol of hydroxybenzoic acid, 20 mmol of catechol, 10 mmol of (R)-2-methyl-1,4-butanediol, and 100 mg of sodium acetate under a nitrogen atmosphere while elevating a temperature stepwise, like 180 °C for one hour, 200 °C for one hour, and 250 °C for one hour.

The polycondensation was continued at a temperature of 250 °C for 2 hours while discharging the nitrogen and continued for another one hour at the same temperature under reduced pressure. The resulting polymer was dissolved in tetrachloroethane and reprecipitated with methanol thereby obtaining a liquid crystalline polyester.

A solution was prepared by dissolving the resulting polyester in N-methyl-2-pyrrolidone (20 percent by mass) and spin-coated to a rubbed polyphenylene sulfide film. Thereafter, the film was dried so as to remove the N-methyl-2-pyrrolidone thereby forming a liquid crystalline polyester coated film over the polyphenylene sulfide film.

The liquid crystalline film was then subjected to a heat treatment at a temperature of 200 °C for 5 minutes and cooled to room temperature thereby obtaining a liquid crystalline polyester film exhibiting a gold specular reflection on the polyphenylene sulfide film.

The transmission spectrum of the film was measured using an ultraviolet, visible, infrared spectrophotometer V-570 manufactured by JASCO Co. It was confirmed that the film was a cholesteric liquid crystal film fixed in cholesteric orientation and exhibiting a selective reflection having a central wavelength of about 600 nm and a selective reflection wavelength bandwidth of about 100 nm. The cholesteric phase and cross-section of the cholesteric liquid crystal film were observed by means of a polarizing microscope and a transmission electron microscope. It was confirmed that the helical axes of the cholesteric liquid crystal phase were homogeneously parallel with each other in the direction of the thickness, and the helical pitch lengths were homogeneously equal in the direction of the thickness.

Each of the methods for analyzing the resulting polyester is as follows:
(1) Inherent viscosity of polyester
   The inherent viscosity of the polyester was measured by means of Ubbelohde's viscometer in a phenol/tetrachloroethane (60/40 weight ratio) solvent at a concentration of 0.5 g/100ml, at 30 °C.
(2) Glass transition temperature (Tg)
   The glass transition temperature of the polyester was measured by means of Du Pont 990 Thermal Analyzer
(3) Identification of liquid crystalline phase
   The liquid crystal phase was observed by means of BH2 polarization microscope, manufactured by Olympus Optical Co., Ltd.

### (Example 1)

An adhesive which will be a protective layer was prepared by adding 5.0 percent by mass of a benzophenone-based ultraviolet absorber Cyasorb UV-24 manufactured by Cytec Industries Inc. to a UV-setting type adhesive Aronix UV-3630 (manufactured by Toagosei Co., Ltd.) and diluting the mixture with M-150 and M-315 (both manufactured by Toagosei Co. , Ltd.) such that the viscosity was 300 mPa · s. The resulting adhesive was coated onto the cholesteric liquid crystal film surface of the cholesteric liquid crystal film obtained in Reference Example 1 by means of a bar coater such that the coated thickness was 5 µm.

Thereafter, a 25 µm thickness easily separable adhesive treated PET G2P8 manufactured by Teijin DuPont Films Japan Limited used as a releasable substrate was laminated on the adhesive layer such that the treated surface was adhered thereto, using a desk laminator and then subjected to ultraviolet irradiation so as to cure the adhesive thereby obtaining a laminate of the releasable substrate, protective layer, cholesteric liquid crystal layer and polyphenylene sulfide film.

Thereafter, the polyphenylene sulfide film used as an alignment substrate was released from the cholesteric liquid crystal film at the boundary therebetween by pinching an end of the polyphenylene sulfide film with a hand and pulling it at an angle of 180 degrees thereby obtaining a laminate of the releasable substrate, protective layer and cholesteric liquid crystal layer laminated in this order.

The peel strength between the releasable substrate and the protective layer of the laminate was measured by releasing at 180 degrees and a speed of 300 mm/minute using Strograph E-L manufactured by Toyo Seiki Seisaku-sho, Ltd. and found to be 5.46 N/m.

A ruled diffraction grating film (900 lines/mm, a product of Edmond Scientific Japan Co.) and the laminate were superposed together in such a manner that the diffraction surface and the cholesteric liquid crystal surface faced each other, and then heated and pressurized at a temperature of 120 °C and pressure of 0.3 MPa for a roll contact time of one second by means of Laminator DX-350 manufactured by Tokyo Laminex Co. thereby obtaining a laminate of the diffraction grating film, cholesteric liquid crystal layer, protective layer and releasable substrate. After the laminate were cooled to room temperature, the diffraction grating film was removed. From the observation of the cholesteric liquid crystal surface on which the diffraction grating film had been superposed, it was recognized that there were rainbow color caused by the diffraction pattern and selective reflection peculiar to cholesteric liquid crystal. Furthermore, the surface orientation state and cross-section of the cholesteric liquid crystal layer were observed by means of a polarizing microscope and a transmission electron microscope, respectively. It was confirmed that there was formed a cholesteric orientation in the liquid crystal layer surface region wherein the helical axes of the cholesteric phase were not homogeneously parallel with each other in the direction of the thickness, and the helical pitches lengths were not homogeneously equal in the direction of the thickness. It was also confirmed that in the other region, the helical axes were homogeneously parallel with each other in the direction of the thickness and the helical pitches lengths were homogeneously equal in the direction of the thickness. An He/Ne laser beam with a wavelength of 632.8 nm was made vertically incident into the cholesteric liquid crystal layer surface. As a result, the laser beam was observed at exit angle of 0° and about ±35°. For the purpose of confirming the polarization characteristics, the laminate was placed under an ordinary interior illumination and was observed through a right-handed circularly polarizing plate transmitting only a right-handed circularly polarized light. As a result, there was observed a reflected and diffracted light of rainbow color with substantially the same brightness as that observed without the polarizing plate. Whereas, when the laminate was observed through a left-handed circularly polarizing plate transmitting only a left-handed circularly polarized light, there was observed a dark field and no reflected and diffracted light of rainbow color.

From the foregoing observations, it was confirmed that the cholesteric liquid crystal layer constituting the laminate had on the layer surface a region exhibiting diffractivity and the diffracted light was a right-handed circularly polarized light.

Thereafter, a hot melt adhesive Superchlon 851L manufactured by Nippon Paper Chemicals was coated on the cholesteric liquid crystal layer by means of a bar coater such that the thickness was 5 µm thereby obtaining a laminate of the releasable substrate, protective layer, cholesteric liquid crystal layer and hot melt adhesive layer.

The resulting laminate was heated and pressurized from the releasable substrate using a roll type hot stumping machine RD-150D manufactured by NAVITAS Co., Ltd. so as to be transferred to a pure paper (Cream Kinmari 90).

The laminate was excellent in the separability of the transferred portion and free from burrs that the portion not to be transferred was released together with the portion to be released and also from a defective releasing that the transferred portion was not sufficiently transferred to the object, i.e., pure paper and a part of the transferred portion remained on the releasable substrate.

### (Example 2)

An adhesive which will be a protective layer was prepared by adding 5.0 percent by mass of a benzophenone-based ultraviolet absorber Cyasorb UV-24 manufactured by Cytec Industries Inc. to a UV-setting type adhesive Aronix UV-3630 (manufactured by Toagosei Co., Ltd.) and diluting the mixture with M-150 and M-315 (both manufactured by Toagosei Co., Ltd.) such that the viscosity was 300 mPa · s. The resulting adhesive was coated onto the cholesteric liquid crystal film surface of the cholesteric liquid crystal film obtained in Reference Example 1 by means of a bar coater such that the coated thickness was 5 µm.

Thereafter, a 38 µm thickness easily separable adhesive treated PET SG2 manufactured by Teijin DuPont Films Japan Limited used as a releasable substrate was laminated on the adhesive layer such that the treated surface was adhered thereto, using a desk laminator and then subjected to ultraviolet irradiation so as to cure the adhesive thereby obtaining a laminate of the releasable substrate, protective layer, cholesteric liquid crystal layer and polyphenylene sulfide film.

Thereafter, the polyphenylene sulfide film used as an alignment substrate were released from the cholesteric liquid crystal film at the boundary therebetween by pinching an end of the polyphenylene sulfide film with a hand and pulling it at an angle of 180 degrees thereby obtaining a laminate of the releasable substrate, protective layer and cholesteric liquid crystal layer laminated in this order.

The peel strength between the releasable substrate and the protective layer of the laminate was measured by releasing at 180 degrees and a speed of 300 mm/minute using Strograph E-L manufactured by Toyo Seiki Seisaku-sho, Ltd. and found to be 5.07 N/m.

Thereafter, a hot melt adhesive Superchlon 851L manufactured by Nippon Paper Chemicals was coated on the cholesteric liquid crystal layer by means of a bar coater such that the thickness was 5 µm thereby obtaining a laminate of the releasable substrate, protective layer, cholesteric liquid crystal layer and hot melt adhesive layer.

The resulting laminate was heated and pressurized from the releasable substrate using a roll type hot stumping machine RD-150D manufactured by NAVITAS Co., Ltd. so as to be transferred to a pure paper (Cream Kinmari 90).

The laminate was excellent in the separability of the transferred portion and free from burrs that the portion not to be transferred was released together with the portion to be released and also from a defective releasing that the transferred portion was not sufficiently transferred to the object, i.e., pure paper and a part of the transferred portion remained on the releasable substrate.

### (Example 3)

An adhesive which will be a protective layer was prepared by adding 5.0 percent by mass of a benzophenone-based ultraviolet absorber Cyasorb UV-24 manufactured by Cytec Industries Inc. to a UV-setting type adhesive Aronix UV-3630 (manufactured by Toagosei Co., Ltd.) and diluting the mixture with M-150 and M-315 (both manufactured by Toagosei Co., Ltd.) such that the viscosity was 300 mPa · s. The resulting adhesive was coated onto the cholesteric liquid crystal film surface of the cholesteric liquid crystal film obtained in Reference Example 1 by means of a bar coater such that the coated thickness was 5 µm.

Thereafter, a 38 µm thickness easily separable adhesive treated PET QT32 manufactured by Toray Industries, Inc. used as a releasable substrate was laminated on the adhesive layer such that the treated surface was adhered thereto, using a desk laminator and then subjected to ultraviolet irradiation so as to cure the adhesive thereby obtaining a laminate of the releasable substrate, protective layer, cholesteric liquid crystal layer and polyphenylene sulfide film.

Thereafter, the polyphenylene sulfide film used as an alignment substrate were released from the cholesteric liquid crystal film at the boundary therebetween by pinching an end of the polyphenylene sulfide film with a hand and pulling it at an angle of 180 degrees thereby obtaining a laminate of the releasable substrate, protective layer and cholesteric liquid crystal layer laminated in this order.

The peel strength between the releasable substrate and the protective layer of the laminate was measured by releasing at 180 degrees and a speed of 300 mm/minute using Strograph E-L manufactured by Toyo Seiki Seisaku-sho, Ltd. and found to be 8.97 N/m.

Thereafter, a hot melt adhesive Superchlon 851L manufactured by Nippon Paper Chemicals was coated on the cholesteric liquid crystal layer by means of a bar coater such that the thickness was 5 µm thereby obtaining a laminate of the releasable substrate, protective layer, cholesteric liquid crystal layer and hot melt adhesive layer.

The resulting laminate was heated and pressurized from the releasable substrate using a roll type hot stumping machine RD-150D manufactured by NAVITAS Co., Ltd. so as to be transferred to a pure paper (Cream Kinmari 90).

The laminate was excellent in the separability of the transferred portion and free from burrs that the portion not to be transferred was released together with the portion to be released and also from a defective releasing that the transferred portion was not sufficiently transferred to the object, i.e., pure paper and a part of the transferred portion remained on the releasable substrate.

### (Comparative Example 1)

An adhesive which will be a protective layer was prepared by adding 5.0 percent by mass of a benzophenone-based ultraviolet absorber Cyasorb UV-24 manufactured by Cytec Industries Inc. to a UV-setting type adhesive Aronix UV-3630 (manufactured by Toagosei Co., Ltd.) and diluting the mixture with M-150 and M-315 (both manufactured by Toagosei Co., Ltd.) such that the viscosity was 300 mPa · s. The resulting adhesive was coated onto the cholesteric liquid crystal film surface of the cholesteric liquid crystal film obtained in Reference Example 1 by means of a bar coater such that the coated thickness was 5 µm.

Thereafter, a 25 µm thickness plain PET NS manufactured by Teijin DuPont Films Japan Limited used as a releasable substrate was laminated on the adhesive layer such that the treated surface was adhered thereto, using a desk laminator and then subjected to ultraviolet irradiation so as to cure the adhesive thereby obtaining a laminate of the releasable substrate, protective layer, cholesteric liquid crystal layer and polyphenylene sulfide film.

Thereafter, the polyphenylene sulfide film used as an alignment substrate were released from the cholesteric liquid crystal film at the boundary therebetween by pinching an end of the polyphenylene sulfide film with a hand and pulling it at an angle of 180 degrees thereby obtaining a laminate of the releasable substrate, protective layer and cholesteric liquid crystal layer laminated in this order.

The peel strength between the releasable substrate and the protective layer of the laminate was measured by releasing at 180 degrees and a speed of 300 mm/minute using Strograph E-L manufactured by Toyo Seiki Seisaku-sho, Ltd. and found to be 1.2 N/m.

Thereafter, a hot melt adhesive Superchlon 851L manufactured by Nippon Paper Chemicals was coated on the cholesteric liquid crystal layer by means of a bar coater such that the thickness was 5 µm thereby obtaining a laminate of the releasable substrate, protective layer, cholesteric liquid crystal layer and hot melt adhesive layer.

The resulting laminate was heated and pressurized from the releasable substrate using a roll type hot stumping machine RD-150D manufactured by NAVITAS Co., Ltd. so as to be transferred to a pure paper (Cream Kinmari 90).

The laminate was poor in the separability of the portion to be transferred and had burrs that the portion not to be transferred was released together with the portion to be released.

## Claims

1. A transferable liquid crystal laminate comprising at least a releasable substrate, a protective layer and a cholesteric liquid crystal layer, the protective layer side of the releasable substrate having been subjected to an easily separable adhesive treatment.

2. The transferable liquid crystal laminate according to claim 1 wherein the peel strength between the releasable substrate and the protective layer is from 1.95 N/m to 19.5 N/m.

3. The transferable liquid crystal laminate according to claim 1 wherein the cholesteric liquid layer has on a part thereof diffractivity.
